Europäisches Patentamt

European Patent Office

Office européen des brevets

(19)

(11) Veröffentlichungsnummer: **0 003 046**
**B1**

(12) **EUROPÄISCHE PATENTSCHRIFT**

(21) Anmeldenummer: **78101843.7**

(22) Anmeldetag: **23.12.78**

(51) Int. Cl.³: **B 01 D 39/08,**
**C 08 L 11/00,**
**B 01 D 25/12, B 01 D 25/26**

(54) **Randabdichtung von Filtertüchern**

(30) Priorität: **05.01.78 DE 2800453**

(43) Veröffentlichungstag der Anmeldung:
**25.07.79 Patentblatt 79/15**

(45) Bekanntmachung des Hinweises auf die Patenterteilung:
**20.08.80 Patentblatt 80/17**

(84) Benannte Vertragsstaaten:
**BE CH DE FR GB IT NL**

(56) Entgegenhaltungen:
**FR - A - 1 169 401**
**GB - A - 726 852**
**US - A - 2 358 290**
**US - A 3 507 818**

(73) Patentinhaber: **Bayer AG**
**Zentralbereich Patente, Marken und Lizenzen**
**D - 5090 Leverkusen 1, Bayerwerk (DE)**

(72) Erfinder: **Tholema, Edzard, Dr.**
**Zum Hahnenberg 3**
**D - 5068 Odenthal (DE)**
**Nonnenbruch, Heinz-Gerd**
**Baumberger Strasse 134**
**D - 5090 Leverkusen (DE)**
**Gossmann, Hans, Ing. grad.**
**Hornstrasse 22**
**D - 5060 Bergisch-Gladback 2 (DE)**
**Schultz, Peter, Dipl.-Ing.**
**Schwalbenweg 14**
**D - 5090 Leverkusen (DE)**

Courier Press, Leamington Spa, England.

## Randabdichtung von Filtertüchern

Die Erfindung richtet sich auf Filtertücher oder Filterfilze mit einem Dichtrand aus einer Polychloroprenlatex-Mischung und Verfahren zu ihrer Herstellung.

Filtertücher und Filterfilze mit Randbeschichtungen aus Polychloropren sind bekannt. Die bekannte Randbeschichtung unterhindet jedoch unzureichend die Kapillarwirkung des Gewebes und klebt im Betrieb stark. Es können daher Gase und/oder Flüssigkeiten aus der Filterpresse entweichen. Durch das Kleben der Beschichtungen ist deren betriebsgerechte Funktion und Haltbarkeit stark herabgezetzt. Gegen das Kleben werden Maßnahmen wie Einpudern mit Talkum nach jedem Einsatz ergriffen.

Es wurde nun gefunden, daß Filtertücher und Filterfilze mit einem Dichtrand aus einer Polychloroprenlatex-Mischung vorteilhafte Eigenschaften haben, wenn die Polychloroprenlatex-Mischung neben einen Carboxylgruppen-enthaltenden Polychlorpren 2 bis 40 Gew.-%, vorzugsweise 15 bis 20 Gew.-% Zinkoxid und 0 bis 50 Gew.-%, vorzugsweise 10 bis 20 Gew.-%te eine Kieselsäurefüllstoffs enthält. Gegenstand der Erfindung sind Filtertücher oder Filterfilze, deren Dichtrand aus einer speziell zusammengesetzten Polychloroprenlatexmischung besteht. Gegenstand der Erfindung ist auch ein Verfahren zum Herstellen von Filtertüchern oder Filterfilzen mit einem speziellen Dichtrand.

Auf die angegebene Weise kann man Filtertücher aus monofilen, multifilen und/oder aus Stapelfaser gesponnenen Garnen und Filterfilze, beispielsweise aus Polypropylen-Polyamid, Polyester, Polyacrylnitril, Viskose, Baumwolle, Kokos, Sisal, Hanf oder Mischungen daraus, mit einem absolut dichtenden Rand versehen.

Die Herstellung des Dichtrandes kann durch Einstreichen, Foulardieren, Sprühen oder Tauchen erfolgen. Tauchen, Einstreichen und Foulardieren sind bevorzugt. Bevorzugt wird die Polychloroprenlatexmischung in mehreren Stufen hintereinander auf den Rand des Filtertuches oder-filzes aufgebracht, wobei die Viskosität der Chloroprenlatex-Mischung von Stufe zu Stufe größer wird. Ganz besonders bevorzugt ist ein Verfahren wobei die Chloroprenlatex-Mischung in 2 Stufen auf den Rand des Filtertuches aufgebracht wird, wobei die Viskosität in der ersten Mischung 50 bis 260 cP beträgt und in der zweiten Mischung 260 bis 650 cP, jeweils gemessen mit dem Haake-Viskosimeter.

Die Vernetzung des Polychloroprens mit Zinkoxid alleine ist ausreichend. Man kann jedoch auch Schwefel und andere Vulkanisationsbeschleuniger zufügen. Die Schwefelvulkanisation führt zu besserer Widerstandsfähigkeit gegen Säuren und Laugen. Der Kieselsäurefüllstoff kann auch durch Kaolin, Kreide oder Ruß ersetzt werden. Inwieweit die Ersatzstoffe geeignet sind hängt von den Filtrieraufgaben ab. Bei höheren Zinkoxidgehalten kann der Kieselsäurefüllstoff auch ersatzlos fallen.

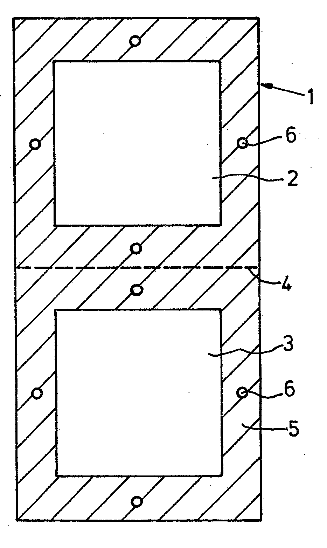

Ein erfindungsgemäßes Filtertuch ist in der Zeichnung dargestellt und im folgenden näher beschrieben. Das Filtertuch 1 setzt sich aus den separat hergestellten beiden Teilen 2, 3 zusammen, die durch die Naht 4 miteinander verbunden sind. Die Größe kann in weitem Bereich schwanken und hängt von der jeweiligen Filterpresse ab. Die Breite der Beschichtung 5 wird an der Breite des Jeweils verwendeten Rahmens angepaßt; üblicherweise ist die Randbreite um 10 cm. Die 8 Löcher 6 im Dichtrand des Filtertuchs sind durch das bisher angewandte Verfahren zum Aufbringen der Randbeschichtung bestimmt; sie beeinträchtigen nicht die Dichtwirkung. In diesem Beispiel wird die Randbeschichtung je Hälfte 2, 3 des Filtertuchs über einen Rahmen gelegt. Im oberen Teil des Rahmens sind 2 Zapfen, die gleich weit wie zwei gegenüberliegende Löcher auf dem Tuch entfernt sind und in die das Filtertuch eingehängt werden kann. Das Filtertuch hängt auf beiden Seiten über dem Rahmen über und durch Absenkung des Rahmens bis zu einem Anschlag in einem Tank, der bis zu einer vorgegebenen Höhe mit der Polychloroprenlatex-Mischung gefüllt ist, taucht das Filtertuch an beiden Seiten ein und wird von der Polychloroprenlatex-Mischung durchtränkt. Dann wird der Rahmen wieder angehoben und an der Luft getrocknet. Das quadratische Filtertuch wird nun um 90° gedreht und die beiden restlichen Ränder beschichtet.

Es hat sich als besonders vorteilhaft herausgestellt, wenn nach dem Trocknen die Ränder des Filtertuchs noch einmal in ein Chloroprenlatex-Mischung getaucht werden, deren Viskosität höher ist. Unter niedriger Viskosität ist ein Bereich von 50 bis 260 cP zu verstehen, unter höherer Viskosität ein Bereich von 260 bis 650 cP, jeweils gemessen mit dem Haake-Viskosimeter. Besonders einfach ist die Viskosität mit dem Fordbecher zu messen. Bei einem Fordbecher mit der Düse 4 beträgt die Auslaufzeit der niederviskosen Mischung etwa 5 bis 20 Sek, der höherviskosen Mischung mit der gleichen Meßeinrichtung 20 bis 40 Sek.

Die Zusammensetzung der Chloroprenlatex-Mischung in den Beispielen ist in der Tabelle angegeben; die Zahlen bezeichnen Gewichtsteile.

| Beispiele | A | B | C | D | E |
|---|---|---|---|---|---|
| a) Carboxylierter Poly-chloroprenlatex 50%ig | 200 | 200 | 200 | 200 | 200 |
| b) Zinkoxid | 10 | 15 | 20 | 30 | 40 |
| c) Kieselsäure-Füllstoff | 20 | 15 | 10 | 10 | 0 |
| d) Äthylenthioharnstoff | 2 | 2 | 2 | 2 | 2 |
| Diphenylguandin | 1 | 1 | 1 | 1 | 1 |
| Kolloidschwefel | 1 | 1 | 1 | 1 | 1 |
| e) Dispergiermittel | 30 | 30 | 30 | 30 | 30 |
| f) Verdickungsmittel | | | | | |
| niedrigviskos | ca. 1 | 1 | 1 | 1 | 1 |
| hochviskos | ca. 5 | 5 | 5 | 5 | 5 |
| g) aminisches Alterungs-schutzmittel | 1,5 | 1,5 | 1,5 | 1,5 | 1,5 |

Als carboxylierter Polychloroprenlatex wurde der (R)Bayprenlatex 4R verwendet. Der Kieselsäurefüllstoff war gefällte Kieselsäure. Äthylenthioharnstoff, Diphenylguandin und Kolloidschwefel sind bekannte Beschleuniger. Als Dispergiermittel wird eine 5%ige wäßrige Lösung von Methylen-bis-naphthalinsulfonsaures Natrium eingesetzt. Das Verdickungsmittel auf Basis Polyacrylat ist eine 25%ige wäßrige Lösung, ein handelsprodukt, daß unter den Namen (R)Collacral VL im Handel ist.

Die durch zweimaliges Tauchen in die erfindungsgemäße Polychloroprenlatex-Mischung hergestellten Filtertücher sind absolut flüssigkeits- und gasdicht. Beim Öffnen der Filterpresser kleben die Filtertücher nicht aneinander.

**Patentansprüche**

1. Filtertuch oder Filterfilz mit einem Dichtrand aus einer Polychloroprenlatex-Mischung, dadruch gekennzeichnet, daß die Polychloroprenlatex-Mischung neben einem Carboxylgruppen enthaltenden Polychloropren 2 bis 40 Gew.-%, vorzugsweise 15 bis 20 Gew-% Zinkoxid und 0 bis 50 Gew-%, vorzugsweise 10 bis 20 Gew-% eines Kieselsäurefüllstoffs enthält.

2. Filtertuch oder Filterfilz nach Anspruch 1, dadurch gekennzeichnet, daß der Kieselsäurefüllstoff durch Kaolin, Kreide, Ruß oder höhere Zinkoxidgehalte ersetzt ist.

3. Filtertuch oder Filterfilz nach Ansprüchen 1 und 2, dadurch gekennzeichnet, daß in der Polychloroprenlatex - Mischung Vulkanisationsbeschleuniger enthalten sind.

4. Verfahren zum Randbeschichten eines Filtertuches oder Filterfilzes mit einer Polychloroprenlatex-Mischung, dadurch gekennzeichnet, daß eine Latex-Mischung, die neben einem Carboxylgruppen enthaltenden Polychloropren 2 bis 40 Gew.-% Zinkoxid und 0 bis 50 Gew.-% Kieselsäurefüllstoff enthält auf den Rand des Filtertuches oder Filterfilzes aufgebracht und vulkanisiert wird.

5. Verfahren nach Anspruch 4, dadurch gekennzeichnet, daß die Polychloroprenlatex-Mischung in mehreren Stufen auf den Rand des Filtertuches oder Filterfilzes aufgebracht wird, wobei die Viskosität der Polychloroprenlatex-Mischung von Stufe zu Stufe größer wird.

6. Verfahren nach Ansprüchen 4 und 5, dadurch gekennzeichnet, daß die Polychloroprenlatex-Mischung in zwei Stufen auf den Rand des Filtertuchs aufgebracht wird, wobei die Viskosität in der ersten Mischung 50 bis 260 cP, die Viskosität in der zweiten Mischung 260 bis 650 cP beträgt, jeweils gemessen mit dem Haake-Viskosimeter.

**Revendications**

1. Drap ou feutre filtrant à bord étanche en un mélange à base de latex de polychloroprène, caractérisé en ce que le mélange à base de latex de polychloroprène contient, en plus d'un polychloroprène portant des groupes carboxyle, 2 à 40% en poids, de préférence 15 à 20% en poids, d'oxyde de zinc et 0 à 50% en poids, de préférence 10 à 20% en poids, d'une charge d'acide silicique.

2. Drap ou feutre filtrant suivant la revendication 1, caractérisé en ce que la charge d'acide silicique est remplacée par du kaolin, de la craie, du noir de fumée ou des teneurs élevées en oxyde de zinc.

3. Drap ou feutre filtrant suivant l'une des revendications 1 et 2, caractérisé en ce que le mélange à base de latex de polychloroprène renferme des accélératuers de vulcanisation.

4. Procédé pour enduire d'un mélange à base de polychloroprène le bord d'un drap ou feutre filtrant, caractérisé en ce qu'un mélange à base de latex qui contient, à côté d'un polychloroprène portant des groupes carboxyle, 2 à 40% en poids d'oxyde de zinc et 0 à 50% en poids d'une charge formée d'acide silicique, est appliqué sur le bord du drap ou de la toile filtrante et vulcanisé.

5. Procédé suivant la revendication 4, caractérisé en ce que le mélange à base de latex de polychloroprène est appliqué en plusieurs étapes sur le bord du drap ou du feutre filtrant, la viscosité dudit mélange à base de polychloroprène augmentant d'une étape à l'autre.

6. Procédé suivant l'une des revendications 4 et 5, caractérisé en ce que le mélange à base de latex de polychloroprène est appliqué en deux étapes sur le bord du drap filtrant, la viscosité, mesurée au viscosimètre Haake, ayant une valeur de 50 à 260 cP pour le premier mélange et une valeur de 260 à 650 cP pour le second mélange.

## Claims

1. Filter cloth or filter felt having a sealing edge of a polychloroprene latex mixture, characterised in that the polychloroprene latex mixture contains from 2 to 40% by weight, preferably from 15 to 20% by weight of zinc oxide and from 0 to 50% by weight, preferably from 10 to 20% by weight of a silicate filler in addition to a polychloroprene with carboxyl groups.

2. Filter cloth or filter felt according to claim 1, characterised in that the silicate filler is replaced by kaolin, chalk, carbon black or higher zinc oxide contents.

3. Filter cloth or filter felt according to Claims 1 and 2, characterised in that the polychloroprene latex mixture contains vulcanization accelerators.

4. Process for the edge coating of a filter cloth or filter felt with a polychloroprene latex mixture, characterised in that a latex mixture which contains from 2 to 40% by weight of zinc oxide and from 0 to 50% by weight of silicate filler in addition to a polychloroprene with carboxyl groups is applied to the edge of the filter cloth or filter felt and vulcanized.

5. Process according to claim 4, characterised in that the polychloroprene latex mixture is applied in several stages to the edge of the filter cloth or filter felt, with the viscosity of the polychloroprene latex mixture increasing from stage to stage.

6. Process according to claims 4 and 5, characterised in that the polychloroprene latex mixture is applied to the edge of the filter cloth in two stages, the viscosity in the first mixture being from 50 to 260 cP, and the viscosity in the second mixture from 260 to 650 cP, measured in each case with a Haake-Viscosi-meter.